# EUROPEAN PATENT APPLICATION

(11) **EP 2 436 250 A1**
(43) Date of publication of application: **04.04.2012**
(21) Application number: 11183262.2
(22) Date of filing: 29.09.2011
(51) Int. Cl.: A01B 49/06

(54) **Soil working apparatus and method**

(30) Priority: 29.09.2010 GB 1016348
(71) Applicant: Lole, Christopher Martin, Peopleton, Worcestershire WR10 2BF (GB)
(72) Inventor: Lole, Christopher Martin, Peopleton, Worcestershire WR10 2BF (GB)
(74) Representative: Dodd, Graham Marshall

(57) **Abstract**

Apparatus for soil working comprising a plurality of soil loosening members (22—38) spaced apart from one another transversely of the apparatus for creating a plurality of zones of loosened soil alongside one another, followed by respective seed delivery members (130) for extending into the zones of loosened soil and for discharging seeds therein at a predetermined depth, characterised in that the seed delivery members (130) are mounted for at least lateral movement relative to the soil loosening members (22-38).

## Description

This invention relates generally to agricultural apparatus and methods, and more particularly to a method and apparatus for soil cultivation and seed sowing.

The long-established practice for agriculture in temperate latitudes is to sow seeds into prepared seed beds created by soil cultivation. The cultivation may include total inversion of the soil in a layer near the surface by ploughing followed by further cultivation operations to create a seed bed suitable for seed germination and good plant growth. Such practices are time consuming at a time of limited operating opportunity in the agricultural calendar, costly in terms of fuel usage in carrying out a number of separate operations (with correspondingly high CO₂ emissions), and can result in poor seed germination due to loss of soil moisture in multiple soil-disturbing operations.

Another problem associated with ploughing, and with multiple cultivation operations involving repeated passage of heavy machinery over the ground, is the establishment, a short distance beneath the soil surface, of a "pan" or layer of compacted soil which acts as a barrier within the soil, creating drainage problems and hindering downwards growth of plant roots.

Agricultural techniques, and the requisite machinery, are known wherein previously-undisturbed soil, e.g. still carrying the stubble of a previous crop, is operated upon by tines which break up the soil only where seed is to be planted, creating shallow trenches of broken soil with strips of still-undisturbed soil therebetween. The tines are followed by means for sowing seed into the respective trenches. The seed sowing may be effected by second tines, with respective associated seed-delivery tubes. The seed sowing means is followed by devices for levelling the soil in which the seed has been sowed. Such apparatus addresses the problem of having to have successive passes of different machinery over the soil, but does not deal with the potential problems of the establishment of a pan in the soil.

With the general aim of addressing these issues, according to one aspect of the invention, I provide apparatus for soil working comprising a plurality of soil loosening members spaced apart from one another transversely of the apparatus for creating a plurality of zones of loosened soil alongside one another, followed (referring to the normal direction of operative movement of the apparatus over the ground) by respective seed-delivery members for extending into the zones of loosened soil and discharging seed therein at a predetermined depth, characterised in that the seed delivery members are mounted for at least lateral movement relative to the soil loosening members.

Preferably the seed delivery members are also mounted for movement upwardly and downwardly relative to the soil loosening members.

Preferably the seed delivery members are carried by respective supporting assemblies which are mounted in a trailing relationship (having regard to the normal direction of operative movement of the apparatus in use) relative to a frame and are connected thereto for pivoting movement about respective generally upright pivot axes.

The respective supporting assemblies for the seed delivery members are preferably also pivotably supported for movement about a, or a respective, generally horizontal axis, to provide for the movement of the seed delivery members upwardly and downwardly as necessary.

The seed delivery members may be individually movable relative to the respective soil loosening members, or they may be movable together or in groups relative to the soil loosening members.

The ability of the seed delivery members to move laterally relative to the soil loosening members, rather than being fixed in alignment therewith, enables the seed delivery members to follow the zones of loosened soil if the latter deviate, in uneven ground or due to the presence of stones for example, so that the seed can be discharged into loosened soil providing good conditions for seed germination and plant growth.

Such pivotal support of the supporting assemblies for the seed delivery members, including the provision of at least one generally upright pivot axis which enables the trailing seed delivery members to move laterally, also enables the apparatus to continue operating if it is not travelling in a straight line, for example when following the shape of a non-rectangular field, on headland, or if there are obstructions such as trees which have to be avoided.

Preferably the seed delivery members are followed by covering members which displace soil to cover discharged seed, further followed by respective packer members such as wheels to give some degree of soil consolidation around the sowed seed.

Hence close soil-to-seed contact can be achieved, giving rapid seed germination in moist soil.

Spring means may be provided for biasing the support assemblies for the seed delivery members and subsequent operating components downwardly relative to the frame part to which they are mounted into contact with the soil, enabling seed sowing at a required depth despite ground unevenness.

The seed delivery members may comprise seed discharge coulters of known type. For supplying seed to such coulters, a storage means such as a seed hopper may be provided on the apparatus and suitable seed metering apparatus and supply tubes extending to the coulters be provided, in known manner.

According to another aspect of the invention I provide apparatus for soil working, comprising a plurality of soil loosening members spaced apart from one another transversely of the apparatus, the members being followed by respective rotary members for crumbling the loosened soil, wherein of the rotary members are carried by at least one support member, the or each support member carrying at least two rotary members for rotation about respective axes spaced from one another lengthwise of the apparatus, and being pivotably supported in the apparatus for angular movement about an axis disposed, in plan view, between the rotational axes of the respective rotary members.

Preferably both the first and second aspects of the invention as above set forth are combined with one another, so that the seed delivery members follow the respective soil loosening members and crumbling/packing rotary members, being spaced an appropriate distance behind the latter. Thus the seed delivery members and subsequent operating components may also be disposed in two rows spaced from one another lengthwise of the apparatus.

However, it would be within the broadest scope of the invention for a seed delivery arrangement in accordance therewith to follow a soil-preparation apparatus in which, instead of the rotary members being arranged in pairs supported in the manner above set forth, a single crumbling/packing roller extending transversely of the apparatus is provided.

The rotary members are preferably wheels bearing pneumatic tyres of a suitable peripheral configuration for crumbling of loosened soil. However, it would, in broad terms, be possible for the rotary members to be of other types, e.g. crumbler rollers of known type.

The support member(s) may carry two or possibly three rotary members. In the case of a support member carrying three rotary members, two may be rotatable about a first axis and one about a second axis.

The apparatus may include at least one support member in which the two rotary members precede, in use of the apparatus, the third rotary member, and at least one support member in which the third rotary member precedes the two rotary members.

The soil loosening members preferably comprise subsoiling legs or tines, each having an operating part intended for operating at a depth sufficient to be beneath any compacted pan layer in the soil, and which comprises an upwardly oriented portion, able to be moved through the soil to penetrate same, and laterally extending portions ("wings" or "winglets") which are configured to lift soil as they are moved therethrough.

If the spacing of the soil loosening members from one another transversely of the apparatus is such that they would not be able to operate satisfactorily due to being too close, they may be arranged in two (or possibly more) rows spaced from one another lengthwise of the apparatus, alternate such members occupying each row in the case of there being two rows.

In many cases, for example in apparatus as described herein where a typical spacing between adjacent soil loosening members transversely of the apparatus is at one third of a metre centres, such soil loosening members would be too close to operate satisfactorily if arranged in a single row. In this case, they may be disposed in two rows with the spacing between the members in each row being approximately 660mm. Each rotary member may then follow its respective soil loosening member at an appropriate distance therefrom.

The rotary members following the soil loosening members, spaced therefrom in the lengthwise direction of travel of the apparatus in use, are effective to create conditions for seed sowing in the soil loosened by the soil loosening members. By providing individual rotary members supported in pairs by pivotably-mounted support members, travel thereof over rough ground is facilitated since each individual rotary member has some freedom for upwards and downwards movement in the apparatus, albeit with correspondingly opposite downwards and upwards movement of the other rotary member in the pair. If one rotary member ceases to rotate, e.g. by being blocked by clods or stones, the other rotary member in the pair, and the other rotary members of the apparatus, can continue to rotate, being independently rotatably carried by their respective support members.

Apparatus in accordance with the invention may be arranged to be connected to a tractor by a three-point linkage, so that at least part of the weight of the apparatus is carried by the tractor, or may be arranged simply to be towed, while being supported on ground-engaging wheels, which may include the above-described pneumatically-tyred crumbling/packing wheels.

The invention also provides a method of soil working and/or seed sowing, resulting from use of the apparatus according to the first and/or second aspects of the invention.

The invention may provide a one-pass machine combining both deep and shallow soil cultivation with seed sowing. The apparatus provides a soil environment well suited for seed germination and good growth.

In particular, the provision of sub-soiling legs cultivates the sub-soil in the root zone, without bringing large lumps of soil to the surface, and at the same time it moves any plant residues or "trash" from a previous crop to the undisturbed soil between the sub-soil legs. The provision of rotary members (crumbler wheels or rollers) supported in the manner of the invention, following the sub-soiling legs, breaks down any soil lumps into smaller particles which can then be firmed to make good contact with the seed. Because the operations are carried out in one pass, the loosened soil retains moisture, assisting the crumbler wheels or rollers in breaking down lumps. The result is to provide the soil with an aerated, moist, fine crumb structure, to make good seed contact. This is combined with sub-soil loosened to allow deep rooting and minimise problems with water logging and subsequent damage to delicate plant roots.

Seed-sowing coulters may be utilised of sufficient width to create a zone in which the seed is distributed in a band of about 100m width at a predetermined depth. This enables each seed to develop with minimal competition from nearby seeds. The ability of the seed sowing coulters to move relative to the sub-soiling legs, horizontally and preferably vertically, enables them to follow the loosened soil zones.

By combining operations which would otherwise require two or more passes of separate machines over the ground, the invention saves time, capital costs, and labour costs. It also provides for reduction in fuel usage and therefore CO₂ emissions.

The invention will now be described by way of example with reference to the accompanying drawings, of which
Figure 1 is a perspective view of apparatus embodying the present invention as above set forth;
Figure 2 is a side elevation of the apparatus;
Figure 3 is a plan view of the apparatus, with part thereof removed for clarity.
Figure 4 is an enlarged perspective view, showing more detail of the apparatus.
Figure 5 depicts parts of apparatus in accordance with the invention, and respective zones of soil being worked nearby.
Figure 6, a, b, c and d are respective diagrammatic cross sections on the lines A-A, B-B, C-C, and D-D of figure 5.

The illustrated apparatus is intended for soil working and seed sowing in a single pass of the apparatus over previously undisturbed ground. In using the expression "previously undisturbed", it is to be understood that this means that the soil has not been subject to one or more cultivation steps such as ploughing as a preliminary to use of the apparatus: it does not preclude the possibility that the soil has been prepared and used to grow a crop at some past time, but rather that the remains of any such previous crop, e.g. cereal stubble, may still be undisturbed in the ground. Nevertheless it will be understood that the apparatus may if desired be used in ground which has been subject to preliminary cultivation.

The illustrated apparatus is intended to be drawn by a tractor, connected to the attachment points of a three-point linkage thereon. To this end, the apparatus comprises a transversely-extending box-section front frame member 10, provided centrally with a spaced parallel pair of forwardly and upwardly extending attachment plates 12, and, spaced laterally outwardly from the plates 12, respective pairs of forwardly and slightly downwardly extending lower attachment plates 14, 16. The free ends of the attachment plates 12, 14, 16 would be provided with respective attachment formations, not shown, for engagement with complementary formations on the upper and spaced lower links of the three point linkage of the tractor.

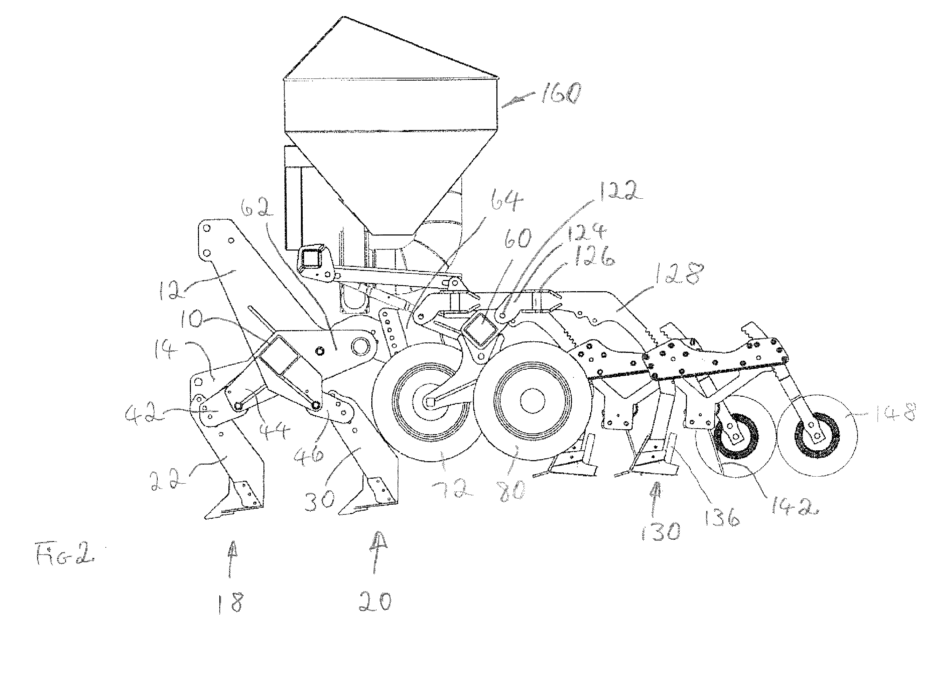

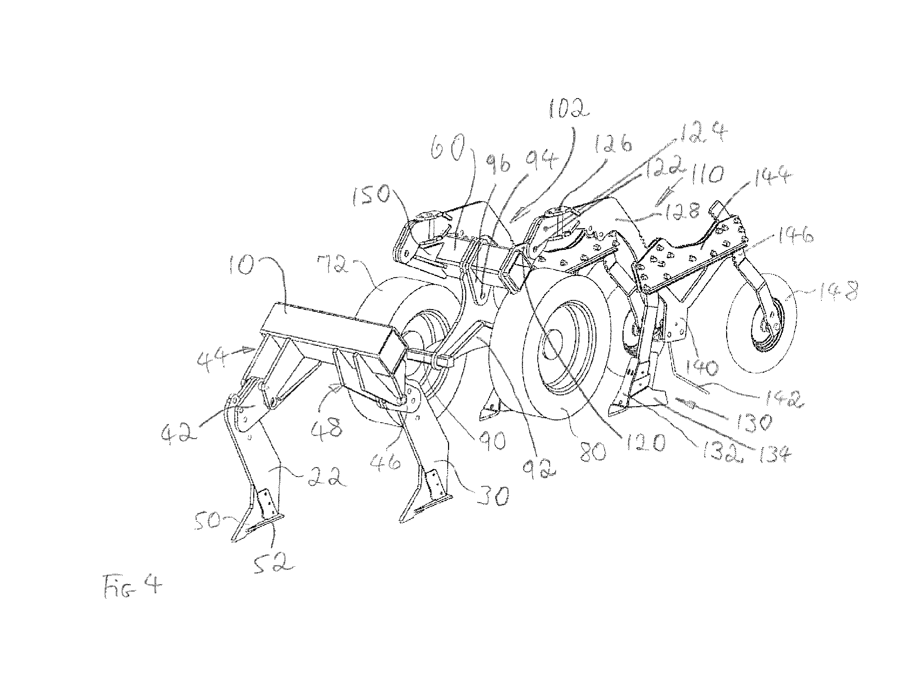

The frame member 10 carries nine soil-loosening members in the form of sub-soiling legs. The legs are spaced from one another transversely of the apparatus and arranged in two rows 18, 20 spaced from one another forwardly and rearwardly of the apparatus. The forwardmost row 18 comprises four such legs 22, 24, 26, 28 while the rearmost row 20 comprises five such legs 30, 32, 34, 36, 38. The legs 22 to 38 on each row are mounted approximately 660mm apart from one another, and the legs in the two rows are staggered relative to one another so that the spacing between adjacent legs, in the direction transversely of the apparatus, is approximately 330mm. The mounting arrangements for the legs 22 to 38 are seen most clearly in Figures 2 and 4 of the drawings. In each case the respective legs are inclined rearwardly as they extend downwardly, and at its uppermost end the leg 22 is held between a pair of mounting plates 42 carried by a support bracket assembly welded to the frame member 10 and extending forwardly and downwardly therefrom. Similarly the legs as 30 in the rearmost row 20 thereof are held between mounting plates 46 and support brackets 48 extending rearwardly and downwardly from the frame member 10. Bolts extending through apertures in the legs and the mounting plates secure the respective legs to the mounting plates, the legs being provided with a number of spaced apertures enabling adjustment of the position of the legs relative to the frame member 10, i.e. the effective depth to which the sub-soiling legs will operate on the soil. As most clearly visible in Figure 4, the legs are provided at their lowermost ends with soil-loosening feet which include a forwardly extending pointed part 50 from which lateral "winglets" extend. The negative rake of the legs, i.e. their rearwards inclination to their free end, gives the leading edge thereof a clod-crushing effect and deflects crop residues, while the winglets 52 at their feet displace soil upwardly and loosen it at plant root depth.

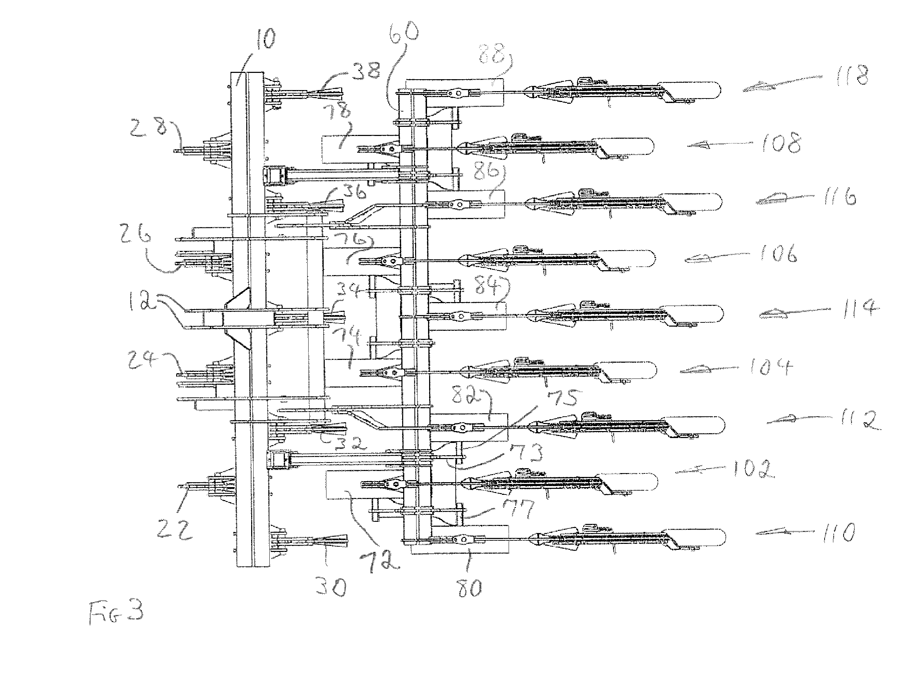

The apparatus further comprises another box-section transverse frame member 60, disposed rearwardly of the frame member 10. They are connected together by chassis members 62 extending rearwardly from the frame member 10, and chassis members 64 extending forwardly from the frame member 60, connected together in such a way as to provide for relative adjustment of the positions of the frame members 10, 60. The frame member 60 carries a number of rotary members for crumbling/packing soil loosened by the respective sub-soiling legs, each such rotary member being in the form of a wheel carrying a pneumatic tyre of suitable tread profile. The wheels, as seen most clearly in Figure 3, comprise a first transverse row of wheels 72, 74, 76 and 78 in line with and spaced rearwardly of the legs 22 to 28, and a rearmost row of wheels 80, 82, 84, 86, 88, spaced rearwardly of and in line with the respective legs 30, 32, 34, 36, 38.

The wheels 72 to 88 are carried by the frame member 60 by three support members, each carrying three wheels. Wheels 72, 80 and 82 are carried by a first support member, wheels 74, 76 and 84 by a second support member, and wheels 78, 86 and 88 by a third support member. In each group of three wheels, there are two wheels rotatable about a first axis and one about a second axis, and in the illustrated embodiment of the invention there are two groups of wheels in which the single wheel precedes the other two wheels in the direction the apparatus travels in use, and one group of wheels in which the two wheels precede the other wheel.

Figure 4 shows part of a support member 92 which carries the wheels 72, 80 and 82. Wheel 72 is carried on an axle 90 extending laterally from a front end part of the support member 92, while wheel 80 is carried on an axle (not shown) extending in the opposite lateral direction from the rear end of the support member. A further part of the support member, not shown in figure 4 but visible at 73 in figure 3 carries wheel 82 on an axle 75 extending oppositely to the axle (77, figure 3) of wheel 80. The support member 92 is itself pivotably supported relative to the frame member 60, for angular movement about a pivot bolt securing an upper part of the support member 92 to a formation 96 on the frame member 60.

The pivot point 94 lies, in plan view, approximately midway between the respective rotational axes of the wheels 72 and 82, so that downwards movement of wheel 72 is accompanied by corresponding relative upwards movement of wheels 80, 82, and vice versa.

Wheels 74, 76, 84, and 78, 86, 88 are supported in groups in the same manner as the wheels 72, 80, 82, differing only in that for the wheels 74, 76 and 84 the support member therefor is reversed from front to rear, as the wheels 74 and 76 precede the wheel 84.

The frame member 60 also provides a mounting for respective seed-sowing assemblies which follow the respective wheels 72 to 88, spaced behind the wheels in the normal operative direction of movement of the apparatus. The seed-sowing assemblies are spaced transversely of the apparatus at the same spacing as the wheels, and like the wheels are staggered relative to one another being arranged in two rows. Hence there is a first row of seed-sowing assemblies indicated at 102, 104, 106, 108, and a second row of assemblies indicated generally at 110, 112, 114, 116, 118 (Figure 3).

The configuration of the seed-sowing assemblies is most clearly seen in Figure 2 and 4, the latter showing all the assembly 110 and part of the assembly 112. The frame member 60 is provided with a rearwardly-inclined mounting plate 120, to which is pivotally connected, by a pivot bolt (not shown) passing through aligned apertures indicated at 122, a pair of spaced parallel plates indicated at 124. The pivotal connection provided at 122 enables the plates 124 to pivot relative to the frame member 60 about a generally horizontal axis extending parallel to the frame member 60. Remote from the frame member 60, the plates 122 are themselves pivotally connected at 126, for pivotal movement about a generally vertical axis, to a member 128 extending rearwardly and downwardly from the pivotal connection 126. At its lowermost end, the member 128 terminates in a seed discharge coulter 130 which is of generally known configuration, having a forwardly-facing part 132 and lateral formations 134 which together create a space in the soil, and, at its rear part, a seed delivery tube 136. This discharges seed into a space in the soil created by the forward parts 132, 134 of the coulter, in known manner.

The supporting assembly for the coulter 130 further includes a part 140 extending rearwardly from the member 128, and carrying a levelling tine 142. There is also a subassembly comprising two supporting plates 144 which are bolted to one another with the member 128 therebetween, which at their ends remote from the member 128 carry a leg 146 therebetween. At its lowermost end, the leg 146 supports a packing wheel 148 which is aligned with the coulter 130. The above-described construction enables the position of the plates 144 to be adjusted relative to the member 128, and the leg 146 to be adjusted relative to the plates 144. The levelling tine 142 is carried by member 140, in turn carried by plates 144, so that the positions of the coulter 130, levelling tine 142, and packing wheel 148 can all be adjusted relative to one another.

Although not illustrated in the drawings, a spring is provided for biasing the entire seed-sowing assembly 110 for pivotal movement, about the pivotal connection 122, relative to the frame member 60. Such a spring may be operative between the member 128 and a suitable connection point provided in association with the frame member 60, and preferably is adjustable in respect of the force it exerts to keep the coulter 130 and other operative parts of the assembly 110 in appropriate contact with the soil.

All the other seed-sowing assemblies 102 to 108 and 112 to 118 are individually of the same construction as the assembly 110. The assemblies 102 to 108 are, however, mounted to the frame member 60 on forwardly-extending fabricated bracket structures as indicated at 150 in Figure 4 for the assembly 102. For all the seed-sowing assemblies, the ability thereof to pivot relative to the frame member 60 about respective generally vertically oriented pivots as at 126 enables lateral movement of the coulters to follow the zones of loosened soil created by their preceding sub-soiling legs.

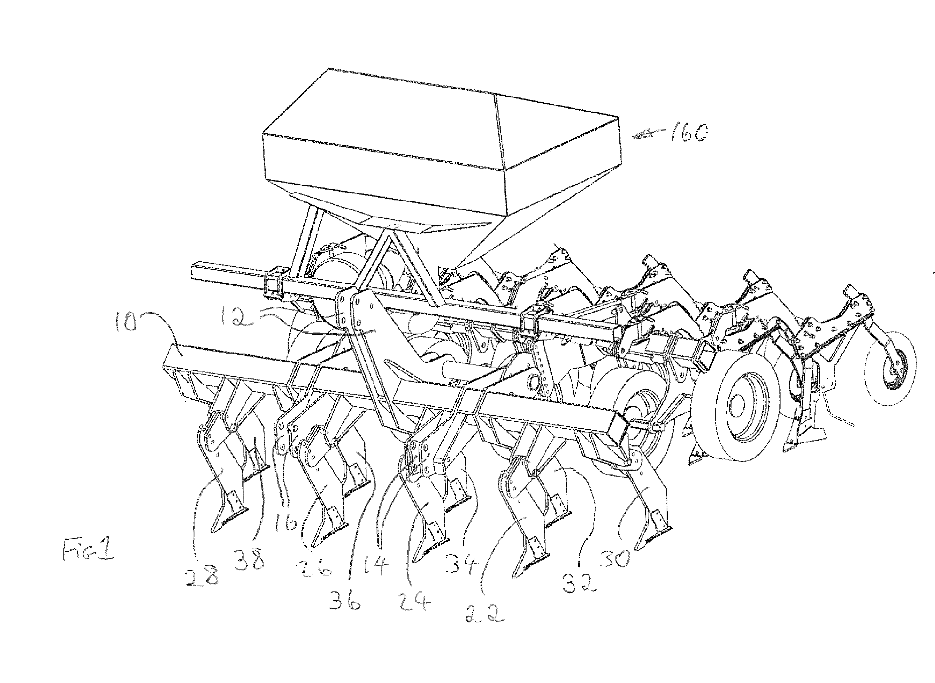

Figures 1 and 2 of the drawings show the apparatus provided with a feed hopper indicated generally at 160, for seed to be sown. This is of known type, and may be mounted in any suitable disposition in relation to the apparatus described above. A suitable known mechanism and control arrangement may be provided for metering seed to the seed delivery tubes as 136 of the respective coulters of the apparatus.

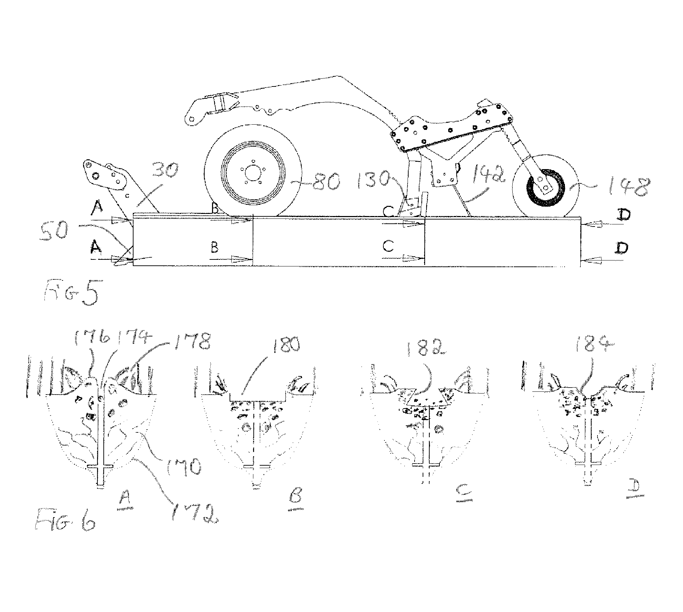

Referring now to figure 5 of the drawings, this shows part of the above-described apparatus and a zone of soil being worked thereby. In particular, it shows a first one 30 of the sub-soiling legs, followed by crumbler wheel 80, coulter 130, and packing wheel 148. As shown in figure 6a, the sub-soiling leg 30, whose operative parts include the forwardly extending part 50 and lateral winglets, creates a zone 170 of loosened and upwardly displaced soil, whose limits are indicated, approximately, by the dotted line 172. The sub-soiling leg creates an upwardly extending slot 174, and adjacent this the soil surface is significantly lifted at each side, as indicated at 176. Remaining stubble or "trash" in that region is displaced laterally outwardly away from the slot 174, as indicated at 178.

The effect of the crumbler wheel 80 is shown in figure 6b. In the vicinity of the slot 174, the soil which has been lifted upwardly is broken down into small particles which is then firmed down or consolidated by the wheel into a region 180 which is substantially clear of any stubble or "trash".

The seed-sowing coulter creates, as shown in figure 6c, an undercut groove 182 into which the seed is discharged. The levelling tine 142, and packing wheel 148, displace the walls of such groove inwardly on top of the seed as indicated at 184 in figure 6d. In this region, the seed is contained within soil which has a fine crumb structure, aerated and moisture-retaining to promote seed germination. At the same time, it is clear of any stubble or previous crop residue, and any residual herbicide thereon will not inhibit plant growth. The seedlings are able to grow, and establish good root structures of sufficient depth to withstand adverse weather conditions.

It will be appreciated that modifications to the above-described construction may be made without departing from the principles embodied in the example described above.

In particular, the principle of providing seed-delivery members such as the coulters above described, which are able to move laterally relative to preceding soil-loosening members, is applicable for apparatus utilising soil loosening members of other configuration than that illustrated. Similarly, the arrangement in pairs of soil crumbling/packing rotary members which follow respective soil loosening members may be utilised in apparatus which does not include the laterally-moveable seed delivery members, or even in apparatus which does not include any seed sowing means. The above-described embodiment of apparatus has an overall width of 3 metres, but it will be appreciated that apparatus of any appropriate width may be constructed utilising the same principles. Apparatus of greater width may be arranged to be foldable, as is generally the case for much agricultural machinery.

The above-described embodiment of the invention is intended to be connected to a tractor by a three-point linkage, so that when the apparatus is in use its weight is borne partly by the tractor and partly by the wheels 72 to 88. When the apparatus is not in use, the three point linkage of the tractor may lift it in its entirety off the ground surface, e.g. for travel to or from ground where it is to be used. Alternatively, the apparatus may be arranged to be towed by a tractor, in which case the weight of the forward-most part of the apparatus including the frame carrying the sub-soiling legs 22 to 38 and the wheels 72 to 88 may be carried by such wheels. To facilitate movement of the apparatus to and from its place of work, either on roads or the land, the groups of three wheels may be supported relative to a frame part or parts of the apparatus by lifting and lowering devices, so that by displacement of the groups of wheels downwardly relative to the frame the sub-soiling legs may be raised clear of the ground surface. Such displacement of the groups of wheels may be effected by fluid-pressure operated (e.g. hydraulic) rams or other actuating devices, and connecting/supporting linkages of any appropriate type. Such devices conveniently are powered from the hydraulic system of the tractor. When the apparatus is to be used, appropriate setting of the height of the groups of wheels determines the depth to which the sub-soiling legs penetrate the ground.

When in use, the weight of the respective seed sowing assemblies is borne partly by the respective packing wheels and partly by the connection of the seed sowing assemblies to the frame member 60. The extent of pivotal movement possible at the horizontal-axis connection of the seed sowing assemblies may be limited, so that the coulters 130 and packing wheels 148 are lifted above ground level when the wheels 72 to 88 are lowered as above described.

The extent of lateral movement afforded by the connections of the seed-sowing assemblies for pivoting about upright axis may be substantial, enabling the seed-sowing coulters to follow in the regions of ground prepared by the sub-soiling legs and their following crumbling wheels even when the apparatus is being turned relatively sharply, e.g. to avoid a tree or other obstruction in a field being worked. For example, in use the packing wheels 148 may displace as much as, or possibly even more than, the lateral distance between the sub-soiling legs, to either side of the "straight ahead" position when the apparatus is turning.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. Apparatus for soil working comprising a plurality of soil loosening members (22—38) spaced apart from one another transversely of the apparatus for creating a plurality of zones of loosened soil alongside one another, followed by respective seed delivery members (130) for extending into the zones of loosened soil and for discharging seeds therein at a predetermined depth, **characterised in that** the seed delivery members (130) are mounted for at least lateral movement relative to the soil loosening members (22-38).

2. Apparatus according to claim 1 further **characterised in that** the seed delivery members (130) are also mounted for movement upwardly and downwardly relative to the soil loosening members (22 -38).

3. Apparatus according to claim 1 or claim 2 further **characterised in that** the seed delivery members (130) are carried by respective supporting assemblies (128) which are mounted in a trailing relationship relative to a frame part (60) of the apparatus, and are connected thereto for pivoting movement about respective generally upright axes.

4. Apparatus according to claim 3 further **characterised in that** the respective supporting assemblies (128) for the seed delivery members (130) are also pivotably mounted for movement about respective generally horizontal pivot axes.

5. Apparatus according to claim 4 further **characterised in that** spring means is provided for biasing the supporting assemblies (128) downwardly relative to a frame part (60).

6. Apparatus according to any of claims 1 to 5 further **characterised in that** the seed delivery members (130) are followed by covering members (142) for displacing soil to cover discharged seed.

7. Apparatus according to claim 6 further **characterised in that** the covering members (142) are followed by packing members (148).

8. Apparatus according to claim 7 further **characterised in that** the packing members (148) comprise wheels.

9. Apparatus according to any of claims 1-8 further **characterised in that** the soil loosening members (22-38) are followed by respective rotary members (72-88) for crumbling the loosened soil, wherein the rotary members (72-88) are carried by at least one support member (92), the or each support member carrying at least two rotary members (72-88) for rotation about respective axes spaced from one another lengthwise of the apparatus, and being pivotably supported in the apparatus for angular movement about an axis disposed, in plan view, between the rotational axes of the respective rotary members (72-88).

10. Apparatus according to any of the preceding claims, adapted to be connected to a tractor by a three-point attachment linkage.

11. Apparatus according to any of the preceding claims having ground-engaging wheels (72-88) on which the apparatus can be supported by being towed by a tractor.

12. Apparatus according to claim 9 further **characterised in that** the rotary members comprise wheels (72 -88) bearing pneumatic tyres.

13. Apparatus according to claim 9 or claim 12 further **characterised in that** each, or at least one, support member (60) carries three rotary members (72 - 88), two being rotatable about a first axis and a third one about a second axis.

14. Apparatus according to any one of the preceding claims further **characterised in that** the soil loosening members (22 -38) each comprise an operating part with an upwardly oriented portion (50) and laterally extending portions (52) for lifting soil as they are moved therethrough.

15. Apparatus according to any one of the preceding claims, further **characterised in that** the soil loosening members (22 -38) are arranged in rows (18, 20) spaced from one another lengthwise of the apparatus, alternate members occupying each row.

16. A method of soil working and seed sowing, comprising creating a plurality of zones of loosened soil alongside one another by moving soil loosening members (22 -38) through the soil, followed by respective seed delivery members (130) for discharging seed into the zones, **characterised in that** the seed delivery members (130) are allowed to move at least laterally relative to the soil loosening members (22 -38) as they follow them.
